# EUROPEAN PATENT SPECIFICATION

(11) **EP 1 939 866 B1**
(45) Date of publication and mention of the grant of the patent: **10.02.2010**
(21) Application number: 07301707.1
(22) Date of filing: 19.12.2007
(51) Int. Cl.: G11B 7/085, G11B 7/09

(54) **Pickup for accessing moving storage media and drive having the pickup**
Lesekopf für den Zugang zu beweglichen Speichermedien und Laufwerk mit dem Lesekopf
Sélection d'accès aux supports de stockage se déplaçant et commande de sélection

(30) Priority: 28.12.2006 EP 06127296
(43) Date of publication of application: 02.07.2008
(73) Proprietor: Thomson Licensing, 92100 Boulogne-Billancourt (FR)
(72) Inventor: Bammert, Michael, 78739 Hardt (DE); Suzuki, Tsuneo, 78087 Mönchweiler (DE); Dupper, Rolf, 78050 Villingen-Schwenningen (DE)
(74) Representative: Thies, Stephan

(56) References cited:
- EP-A2- 0 902 423

## Description

### BACKGROUND OF THE INVENTION

### FIELD OF THE INVENTION

The present invention is related to a pickup for accessing moving storage media according to the preamble of claim 1. Pickups are used as part of a recording and/or reproducing apparatus, e.g. of a DVD player, a DVD recorder or of similar apparatuses.

### DESCRIPTION OF THE PRIOR ART

A pickup for accessing moving storage media records and/or reproduces information with respect to the moving storage media carrying substantially parallel information tracks, namely a turning disk, while moving in the radial direction of the disk.

A pickup, referred to as an objective lens actuator, which uses an actuator with a flat form, referred to as an objective lens holder, facilitates manufacturing and fabrication, is described in the US 2006/0143639. The pickup controls the focus direction, tracking direction and radial tilt direction of its optical pickup head.

The pickup comprises a carrier, constituted as a ferromagnetic yoke, a damper holder and a printed circuit, the actuator with a lens and suspension wires extending from a rear of the carrier and joining the carrier and the actuator. The actuator is constituted as a substantially rectangular flat board. The flat board is arranged orthogonal to the focus direction and carries tracking coils and focus coils. The lens is arranged on the upper side, which is directed to the disk, at the centre of the flat board. A counter weight can be provided.

In addition the pickup comprises a magnet configuration connected to the carrier with four tracking magnets and two focus magnets. Two tracking magnets each are arranged at opposite sides of the flat board in the tracking direction and extend orthogonal to the focus direction above and under the flat board. The two focus magnets are arranged in front of and behind the flat board and extend orthogonal to the direction of the tracks.

The suspension wires both movably support the actuator, as well as apply currents to the coils on the actuator. The coils and the magnet configuration, all together referred to as a magnetic driving portion, initiate the movements of the actuator. The actuator is movable relatively to the carrier in the focus direction, the tracking direction and in the radial tilt direction in a plane spanned by the focus direction and by the tracking direction, respectively. By moving the actuator with the lens, the beam spot can be accurately located on the disk.

As a disadvantage can be seen, that there is a certain distance between the lens arranged at the centre and the outer surfaces of the pickup. Since some driving elements are needed in the centre opening of a running disk, the lens of the pickup cannot be positioned near the centre of the disk. As a result, the recording and/or reproducing of data is not possible in a certain region around the centre of the disk.

An additional thin pickup, referred to as an objective lens driving device, is described in the JP 101721157 A2. The device comprises tracking driving magnets and focusing driving magnets arranged around a lens holder for holding an objective lens. Projecting poles protrude toward these magnets from the lens holder and tracking driving coils and focusing driving coils are wound on these projecting poles.

This round pickup is suspended in its centre. As a disadvantage, the movements of the lens in the tracking direction follow a circular arc, which is more strongly curved than that of a pickup with suspension wires. The pickup provides a lens, which is arranged in the direction of the tracks in front of the lens holder and in the tracking direction in the middle of the pickup. The pickup is also not able to record and/or reproduce data in a certain region around the centre of the disk.

### SUMMARY OF THE INVENTION

It is therefore desirable to improve a pickup according to the preamble of claim 1 in order to record and/or reproduce data in a certain region around the centre of the disk.

According to the invention this is achieved by the features of claim 1. Possible advantageous developments of the invention are specified in the dependent claims.

A pickup for accessing moving storage media carrying substantially parallel information tracks has a carrier, an actuator with a lens and suspension wires joining the carrier and the actuator. The actuator is movable in a focus direction and in a tracking direction. It has a substantially rectangular flat board carrying the lens and a counter weight. The flat board is arranged orthogonal to the focus direction and carries tracking coils and focus coils.

The suspension wires are arranged substantially parallel and are orientated in the direction of the information tracks being scanned on the media and extend from a rear, typically from a holder, of the carrier to the flat board. They are arranged symmetrically in reference to the flat board and are soldered at opposite sides of the flat board.

The pickup has a magnet configuration connected to the carrier with at least two tracking magnets and with at least two focus magnets. The tracking magnets are arranged at opposite sides of the flat board in the tracking direction and extend orthogonal to the focus direction above and/or under the flat board. The focus magnets are arranged in front of and behind the flat board and extend orthogonal to the direction of the tracks. In other words, the focus magnets are arranged at opposite sides, the rear and the front, of the flat board in the direction of the tracks. The rear of the flat board is directed to the rear of the carrier. A front focus magnet is arranged in front of the flat board and a rear focus magnet is arranged at the rear of the flat board, namely between the rear of the carrier and the flat board.

According to the invention the lens is arranged asymmetrically in reference to an axis through a centre of the flat board parallel to the direction of the tracks while the lens and the counter weight are symmetrically arranged in reference to the centre of the flat board. In other words, the counter weight is symmetrically arranged at a diagonal line extending from the lens through the centre of the flat board to the counter weight.

An asymmetrically arranged lens is located near the outer surface of the pickup at one side of the flat board in the tracking direction. As a result, a pickup of the invention can record and/or reproduce data near the centre of the disk.

Preferably, the lens is arranged at a front corner of the flat board, namely a corner at the front of the flat board which is opposite to the rear of the carrier.

Advantageously, longer sides of the flat board can be arranged parallel to the tracking direction, between the focus magnets while side parts of the flat board can project from the focus magnets at both sides. The lens can be arranged in front of one of the side parts next to a front focus magnet. Preferably, the tracking magnets can be arranged in the region of the side parts of the flat board.

Advantageously, the tracking magnets can be arranged on a base of the carrier under the flat board, while side arms of the base arranged over the flat board constitute yokes for the tracking magnets.

Preferably a moving storage media drive is provided with a pickup according to the invention.

The carrier, being an ensemble of rigidly connected elements, does not preclude that typically the pickup as a whole, including a carrier, suspension wires and an actuator, is movable and is being moved, so that all storage locations on the medium can be accessed, in a direction orthogonal to information tracks on the storage medium. In this, accessing shall encompass reading access for reading information from the storage medium, or writing access for writing or recording information onto the storage medium, or combinations of reading and writing access.

One possible form of moving storage media is disks carrying concentric circular or spiral information tracks, with the access being of reflective type where an access light beam is being generated and focused onto the information track and a reflected light beam coming back from and being modulated by the information track is being focused onto a photo detector arrangement and being evaluated. However, it is within the scope of this invention to be used on other forms of optical recording medium having information tracks in layers, like those in card or tape form; and regardless whether the access principle is of a reflective or of a transductive type.

### BRIEF DESCRIPTION OF THE DRAWINGS

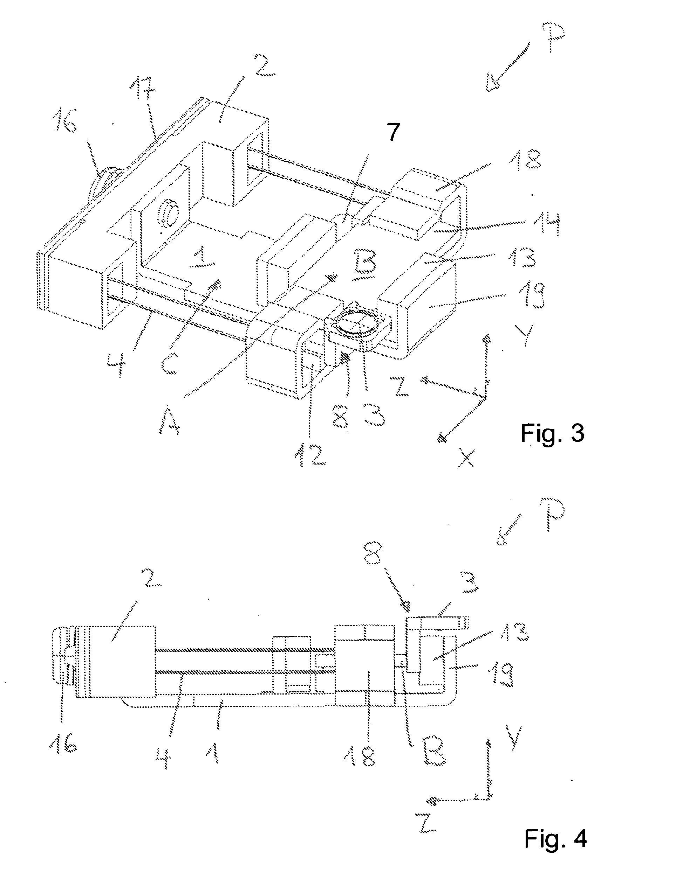

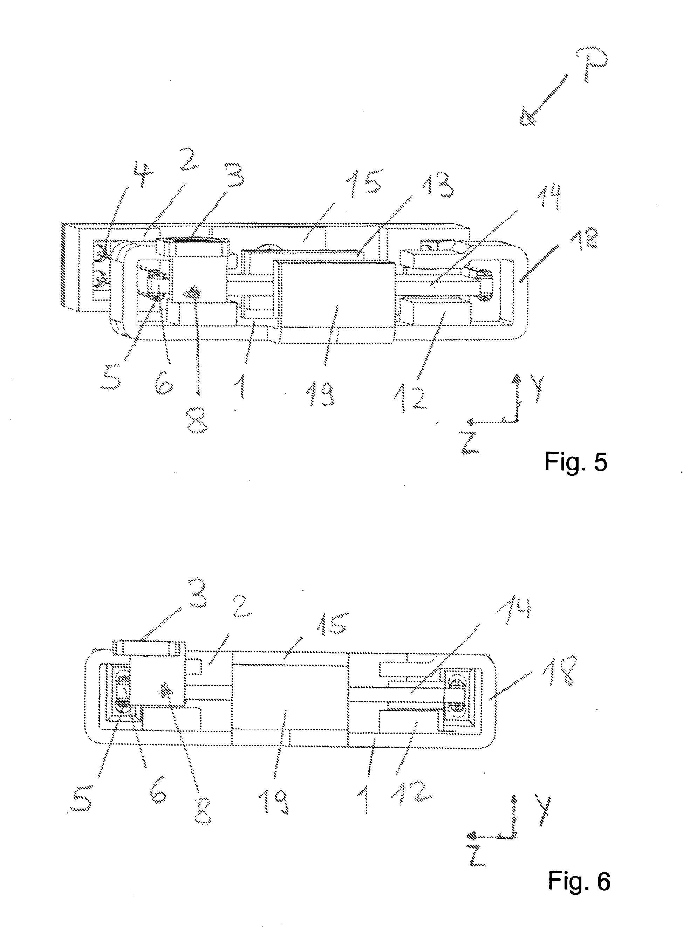

The invention will be explained in more detail using one embodiment, illustrated in figures 1 to 6.

In the figures:
- Figure 1: shows a simplified perspective view of a flat board with a lens of the embodiment of the invention;
- Figure 2: shows a simplified side view of the flat board;
- Figure 3: shows a simplified perspective view of a pickup with the flat board from the top;
- Figure 4: shows a simplified side view of the pickup;
- Figure 5: shows a simplified perspective view of the pickup from the front and
- Figure 6: shows a simplified front view of the pickup.

### DETAILED DESCRIPTION OF AN EMBODIMENT OF THE INVENTION

With reference to the figures, according to the invention a pickup P for accessing moving storage media, namely a disk D, has a carrier C with a base 1 and a holder 2, an actuator A with a lens 3 and four suspension wires 4 extending from the rear of the carrier C and joining the carrier C and the actuator A.

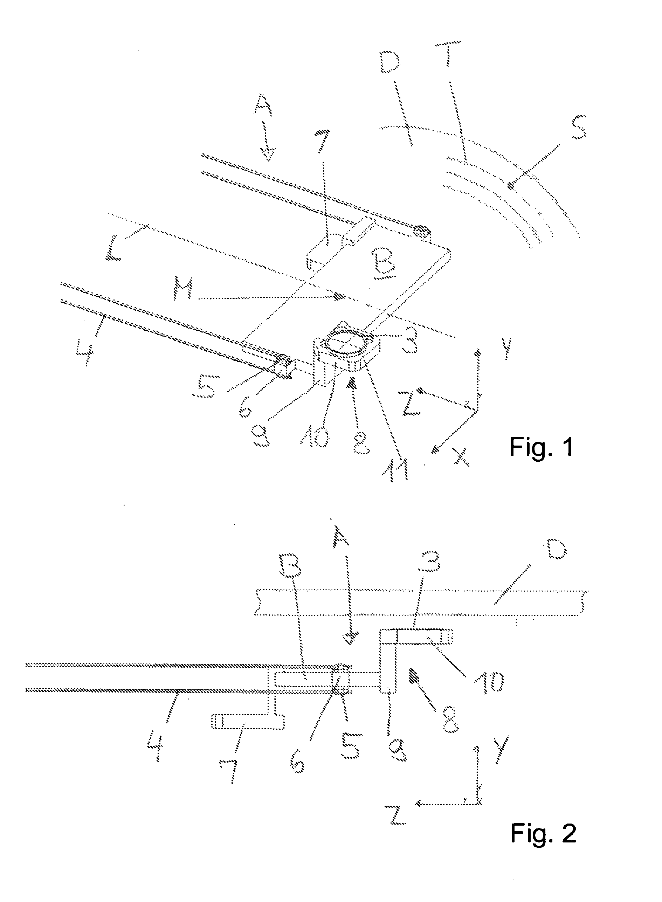

By means of the suspension with the suspension wires 4, the actuator A with the lens 3 is able to perform focus motion in a focus direction Y orthogonal to the disk D carrying substantially circular information tracks T shown in figure 1 with very enlarged, disproportionate distance. Additionally, the actuator A is able to perform tracking motion in a tracking direction X parallel to the surface of the disk D and orthogonal to the information tracks T. Additionally, the actuator A is able to perform so-called radial tilt motion by rotating around an information direction Z which is parallel to the direction of the tracks T, namely to the tangent to the information tracks T at a scanning spot S.

The actuator A comprises a flat board B, which is arranged orthogonal to the focus direction Y and which carries the lens 3. The suspension wires 4 are arranged parallel and orientated in the information direction Z. They are arranged symmetrically with respect to the flat board B. Two suspension wires 4 end at each of two opposite sides in the tracking direction X of the flat board B. The two suspension wires 4 are arranged on top of each other in the focus direction Y, at each side of the flat board B and are soldered with one end to the flat board B by soldering points 5. The flat board B has a substantially rectangular shape and comprises a small projection 6 in the middle of each of its opposite sides in the tracking direction X. The soldering points 5 of the two corresponding suspension wires 4 are located at the top and bottom of each of the two projections 6.

According to the invention the lens 3 is arranged asymmetrically in reference to an axis L parallel to the information direction Z through a centre M of the flat board B while the lens 3 and a counter weight 7 are symmetrically arranged in reference to the centre M. In particular, the lens 3 is arranged at a front corner of the flat board B, namely a corner at the front of the flat board B, which is opposite to the rear of the carrier C. The lens 3 is connected to the flat board B by a coupling element 8. The coupling element 8 has the shape of a right angle, of which one side 9 extends orthogonal to the information direction Z and of which another side 10 extends orthogonal to the focus direction Y. The side 9 is connected to the flat board B with its bottom edge while the side 10, which has an opening 11 for the lens 3, extends in front of, from and above the flat board B. The counter weight 7 is arranged at the opposite rear corner of the flat board B, e.g. at the corner located at the end of a diagonal from the lens 3 through the centre C of the flat board B. The shape, the weight and the arrangement of the counter weight 7 corresponds to that of the coupling element 8 with the lens 3 in a way that the counter weight 7 extends behind, from and under the flat board B.

The flat board B carries tracking coils and focus coils, which are not shown in the figures, on its upper side. In particular, the flat board B is constituted by a printed circuit board.

The pickup P has a magnet configuration, which is connected to the carrier C with two tracking magnets 12 and with two focus magnets 13. The tracking magnets 12 are arranged at opposite sides of the flat board B in the tracking direction X and extend under the flat board B orthogonal to the focus direction Y. The two focus magnets 13 are arranged in front of and behind the flat board B and extend orthogonal to the direction of the tracks T.

The flat board B is arranged with its longer sides, which extend parallel to the tracking direction between the focus magnets 13, while the flat board B projects from the focus magnets 13 at both sides with side parts 14. The longer sides constitute the front and the rear of the flat board B. The lens 3 is arranged in front of one of the side parts 14 next to the front focus magnet 13. The tracking magnets 12 are arranged in the region of the side parts 14 of the flat board B. The tracking magnets 12 and the focus magnets 13 are arranged on the base 1 of the carrier C.

The base 1 extends in a plane orthogonal to the focus direction Y and parallel to the disk D, i.e. in the plane spanned by the tracking direction X and the information direction Z. The holder 2 is connected to a strap 15 of the base 1 by as screw 16. The holder 2 comprises a second printed circuit board 17 with soldering points for the other ends of the suspension wires 4. The second printed circuit board 17 is located behind the actuator A, in other words, at that side of the holder 2 which is opposite to the flat board B. The holder 2 is constituted by a damping block with a damping material inside, which damps the suspension wires 4 extending through the holder 2.

The base 1 of the carrier C comprises two arms 18, of which each extends under the flat board B in the region of the side part 14, extends around the side part 14 with the projection 6 with the soldered ends of the suspension wires 4 and extends above the flat board B orthogonal to the focus direction Y. The arms 18 constitute yokes for the tracking magnets 12. A gap between the flat board B and the upper part of the arms 18 has a certain width to enable e.g. focus movements of the actuator A.

The base 1 of the carrier C comprises two additional elements 19 which extend orthogonal to the base 1, a shape of which corresponds to the shape of the focus magnets 13. Each of the elements 19 faces one of the focus magnets 13 on its side opposite to the flat board B. The elements 19 constitute yokes for the focus magnets 13.

As an alternative, the flat board B carries attached tracking coils and focus coils.

A pickup P according to this invention can be used in the so-called slide or sled design of optical media drives, where it is shiftably fitted to a frame structure of the drive, with appropriate linear driving means for realising the shift, such as linear motors or a motor driven threaded rod. Alternatively, the pickup P according to this invention is also usable in the so-called swivel arm design, where it is pivotably mounted on the end of an arm having a pivoting axis parallel to the focus direction. In that way, the pickup P is movable across the tracks T on the surface of the disk D along an arc which has its main extension in the tracking direction X.

## Claims

1. A pickup (P) for accessing moving storage media (D) carrying substantially parallel information tracks (T), the pickup (P) having a carrier (C), an actuator (A) with a lens (3) and suspension wires (4) extending from a rear of the carrier (C) and joining the carrier (C) and the actuator (A), the actuator (A) movable in the focus direction (Y) and in a tracking direction (X) and having a substantially rectangular flat board (B) carrying the lens (3) and a counter weight (7), the flat board (B) arranged orthogonal to a focus direction (Y)and carrying tracking and focus coils,
the pickup (P) having a magnet configuration connected to the carrier (C) with at least two tracking magnets (12) arranged, in the tracking direction (X,) at opposite sides of the flat board (B) and extending orthogonal to the focus direction (Y) above and/or under the flat board (B) and with at least two focus magnets (13) arranged in front of and behind the flat board (B) and extending orthogonal to the direction of the tracks (T),
the pickup (P) **characterised in that** the lens (3) is arranged asymmetrically in reference to an axis (L) through a centre (M) of the flat board (B) parallel to the direction of the tracks (T) while the lens (3) and the counter weight (7) are symmetrically in reference to the centre (M) of the flat board (B).

2. A pickup (P) according to claim 1, where the lens (3) is arranged at a front corner of the flat board (B).

3. A pickup (P) according to claim 1 or 2, where longer sides of the flat board (B) are arranged between the focus magnets (13) parallel to the tracking direction (X), where the flat board (B) projects from the focus magnets (13) at both sides and where the lens (3) is arranged in front of the side part (14) next to a front focus magnet (13).

4. A pickup (P) according to claim 3, where the tracking magnets (12) are arranged in the region of the side parts (14) of the flat board (B).

5. A pickup (P) according to 4, where the tracking magnets (12) are arranged on a base (1) of the carrier (C) and where side arms (18) of the base (1) are arranged over the flat board (B) constituting yokes for the tracking magnets (12).

6. A moving storage media drive **characterised in that** it has a pickup (P) according to one of claims 1 to 5.

## Patentansprüche

1. Aufnehmer (P) für das Zugreifen auf bewegliche Speichermedien (D), die im Wesentlichen parallele Informationsspuren (T) tragen,
wobei der Aufnehmer (P) einen Träger (C), ein Stellglied (A) mit einer Linse (3) und Aufhängedrähte (4), die von einem hinteren Ende des Trägers (C) ausgehen und den Träger (C) und das Stellglied (A) verbinden, aufweist, wobei das Stellglied (A) in der Fokussierungsrichtung (Y) und in einer Spurverfolgungsrichtung (X) beweglich ist und eine im Wesentlichen rechteckige ebene Platte (B) aufweist, die die Linse (3) und ein Gegengewicht (7) trägt, wobei die ebene Platte (B) orthogonal zu einer Fokussierungsrichtung (Y) angeordnet ist und eine Spurverfolgungs- und eine Fokussierungsspule trägt,
wobei der Aufnehmer (P) eine mit dem Träger (C) verbundene Magnetkonfiguration mit mindestens zwei Spurverfolgungsmagneten (12), die in der Spurverfolgungsrichtung (X) auf gegenüberliegenden Seiten der ebenen Platte (B) angeordnet sind und über und/oder unter der ebenen Platte (B) orthogonal zu der Fokussierungsrichtung (Y) verlaufen, und mit mindestens zwei Fokussierungsmagneten (13), die vor und hinter der ebenen Platte (B) angeordnet sind und orthogonal zu der Richtung der Spuren (T) verlaufen, aufweist,
wobei der Aufnehmer (P) **dadurch gekennzeichnet ist, dass** die Linse (3) in Bezug auf eine Achse (L) durch eine Mitte (M) der ebenen Platte (B) parallel zu der Richtung der Spuren (T) asymmetrisch angeordnet ist, während die Linse (3) und das Gegengewicht (7) in Bezug auf die Mitte (M) der ebenen Platte (B) symmetrisch sind

2. Aufnehmer (P) nach Anspruch 1, bei dem die Linse (3) in einer vorderen Ecke der ebenen Platte (B) angeordnet ist.

3. Aufnehmer (P) nach Anspruch 1 oder 2, bei dem die längeren Seiten der ebenen Platte (B) parallel zu der Spurverfolgungsrichtung (X) zwischen den Fokussierungsmagneten (13) angeordnet sind, bei dem die ebene Platte (B) an beiden Seiten von den Fokussierungsmagneten (13) vorsteht und bei dem die Linse (3) neben einem vorderen Fokussierungsmagneten (13) vor dem Seitenteil (14) angeordnet ist.

4. Aufnehmer (P) nach Anspruch 3, bei dem die Spurverfolgungsmagneten (12) in dem Gebiet der Seitenteile (14) der ebenen Platte (B) angeordnet sind.

5. Aufnehmer (P) nach Anspruch 4, bei dem die Spurverfolgungsmagneten (12) auf einer Grundplatte (1) des Trägers (C) angeordnet sind und bei dem über der ebenen Platte (B) Seitenarme (18) der Grundplatte (1) angeordnet sind, die Joche für die Spurverfolgungsmagneten (12) bilden.

6. Laufwerk für bewegliche Speichermedien, **dadurch gekennzeichnet, dass** es einen Aufnehmer (P) nach einem der Ansprüche 1 bis 5 aufweist.

## Revendications

1. Tête (P) d'accès aux supports de stockage se déplaçant (D) comportant des pistes d'informations pratiquement parallèles (T),
la tête (P) possédant un support (C), un mécanisme d'accès (A) doté d'une lentille (3) et de câbles de suspension (4) s'étendant de l'arrière du support (C) et rejoignant le support (C) et le mécanisme d'accès (A), le mécanisme d'accès (A) se déplaçant dans la direction de focalisation (Y) et dans une direction d'alignement (X) et possédant une carte plane (B) pratiquement rectangulaire comportant la lentille (3) et un contrepoids (7), la carte plane (B) étant agencée de façon orthogonale par rapport à une direction de focalisation (Y) et comportant des bobines d'alignement et de focalisation,
la tête (P) présentant une configuration en aimant raccordée au support (C) avec au moins deux aimants d'alignement (12) agencés, dans la direction d'alignement (X) au niveau des bords opposés de la carte plane (B) et s'étendant de façon orthogonale par rapport à la direction de focalisation (Y) au dessus et/ou au dessous de la carte plane (B) et avec au moins deux aimants de focalisation (13) agencés devant et derrière la carte plane (B) et s'étendant de façon orthogonale par rapport à la direction des pistes (T),
la tête (P) **caractérisée en ce que** la lentille (3) est agencée de façon asymétrique par rapport à un axe (L) via un centre (M) de la carte plane (B) parallèle à la direction des pistes (T), tandis que la lentille (3) et le contrepoids (7) sont symétriques par rapport au centre (M) de la carte plane (B).

2. Tête (P) selon la revendication 1, où la lentille (3) est agencée au niveau d'un angle avant de la carte plane (B).

3. Tête (P) selon la revendication 1 ou 2, où les bords les plus longs de la carte plane (B) sont agencés entre les aimants de focalisation (13) parallèles à la direction d'alignement (X), où la carte plane (B) réalise une projection à partir des aimants de focalisation (13) au niveau des deux bords et où la lentille (3) est agencée en face de la partie latérale (14) à proximité d'un aimant de focalisation avant (13).

4. Tête (P) selon la revendication 3, où les aimants d'alignement (12) sont agencés dans la zone des parties latérales (14) de la carte plane (B).

5. Tête (P) selon la revendication 4, où les aimants d'alignement (12) sont agencés sur une base (1) du support (C) et où des bras latéraux (18) de la base (1) sont agencés sur la carte plane (B) constituant des colliers pour les aimants d'alignement (12).

6. Lecteur de support de stockage se déplaçant, **caractérise en ce qu'**il possède une tête (P) selon une des revendications 1 à 5.
